Europäisches Patentamt

European Patent Office

Office européen des brevets

(19)

(11) EP 1 159 719 B1

(12) EUROPEAN PATENT SPECIFICATION

(45) Date of publication and mention
of the grant of the patent:
**03.08.2005 Bulletin 2005/31**

(51) Int Cl.7: **H04J 3/06**

(86) International application number:
**PCT/IL2000/000156**

(21) Application number: **00909608.2**

(22) Date of filing: **14.03.2000**

(87) International publication number:
**WO 2000/055829 (21.09.2000 Gazette 2000/38)**

(54) **JITTER BUFFER AND METHODS FOR CONTROL OF SAME**

JITTERPUFFER UND VERFAHREN ZUR DESSEN EINSTELLUNG

TAMPON ANTI-INSTABILITE ET PROCEDES DE COMMANDE ASSOCIES

(84) Designated Contracting States:
**AT BE CH CY DE DK ES FI FR GB GR IE IT LI LU
MC NL PT SE**

(30) Priority: **15.03.1999 US 267350**

(43) Date of publication of application:
**05.12.2001 Bulletin 2001/49**

(73) Proprietor: **Vocaltec Communications Ltd.
46733 Herzlia (IL)**

(72) Inventors:
• **POGREBINSKY, Vladimir
59200 Bat Yam (IL)**
• **CASTER, Noam
63411 Tel Aviv (IL)**

(74) Representative: **Freed, Arthur Woolf et al
Marks & Clerk
Incorporating Edward Evans Barker
90 Long Acre
London WC2E 9RA (GB)**

(56) References cited:
**US-A- 4 453 247          US-A- 5 127 001
US-A- 5 323 272**

• **RAMACHANDRAN RAMJEE ET AL: "ADAPTIVE
PLAYOUT MECHANISMS FOR PACKETIZED
AUDIO APPLICATIONS IN WIDE-AREA
NETWORKS" PROCEEDINGS OF THE
CONFERENCE ON COMPUTER
COMMUNICATIONS (INFOCOM). TORONTO,
JUNE 12 - 16, 1994, LOS ALAMITOS, IEEE COMP.
SOC. PRESS, US, vol. 2, 12 June 1994
(1994-06-12), pages 680-688, XP000496524
ISBN: 0-8186-5572-0**
• **BLEFARI-MELAZZI N ET AL: "Dimensioning of
play-out buffers for real time services in a
B-ISDN" BROADBAND COMMUNICATIONS,
1998. ACCESSING, TRANSMISSION,
NETWORKING. PROCEEDINGS. 1998
INTERNATIONAL ZURICH SEMINAR ON
ZURICH, SWITZERLAND 17-19 FEB. 1998, NEW
YORK, NY, USA,IEEE, US, 17 February 1998
(1998-02-17), pages 209-218, XP010277023
ISBN: 0-7803-3893-6**
• **FLOYD S ET AL: "RANDOM EARLY DETECTION
GATEWAYS FOR CONGESTION AVOIDANCE"
IEEE / ACM TRANSACTIONS ON NETWORKING,
IEEE INC. NEW YORK, US, vol. 1, no. 4, 1 August
1993 (1993-08-01), pages 397-413, XP000415363
ISSN: 1063-6692**

**Description**

## FIELD OF THE INVENTION

The present invention relates to an audio receiver for use with communication networks and in particular to methods and apparatus for adjusting a jitter buffer to an optimal size for playing audio, that has been transferred over unstable networks.

## BACKGROUND OF THE INVENTION

Communication networks, such as wide area networks (WAN), are commonly known, and perhaps the fastest growing of these is the Internet. One Internet application, known as multimedia transceiver, enables users to transmit and receive audio, video and data over the Internet. An example of this application, known as Internet telephony client, allows for telephone calls over the Internet.

Audio may be transmitted in streams of packets over the Internet. The Internet, as well as other communication networks, has regular jitter, defined in Schulzrinne, et al., "RTP: A Transport Protocol For Real-Time Applications", Network Working Group-IETF, Request for Comments (RFC): 1889, January 1996, available at http://www.ietf.org/rfc/rfc1889.txt, hereinafter referred to as "RFC 1889". Jitter for the Internet is for example, 100 milliseconds. To compensate for this network jitter, the receiver typically includes a jitter buffer, that controls packet transmission rate. An exemplary jitter buffer is disclosed in commonly assigned U.S. Patent. No. 5,825,771.

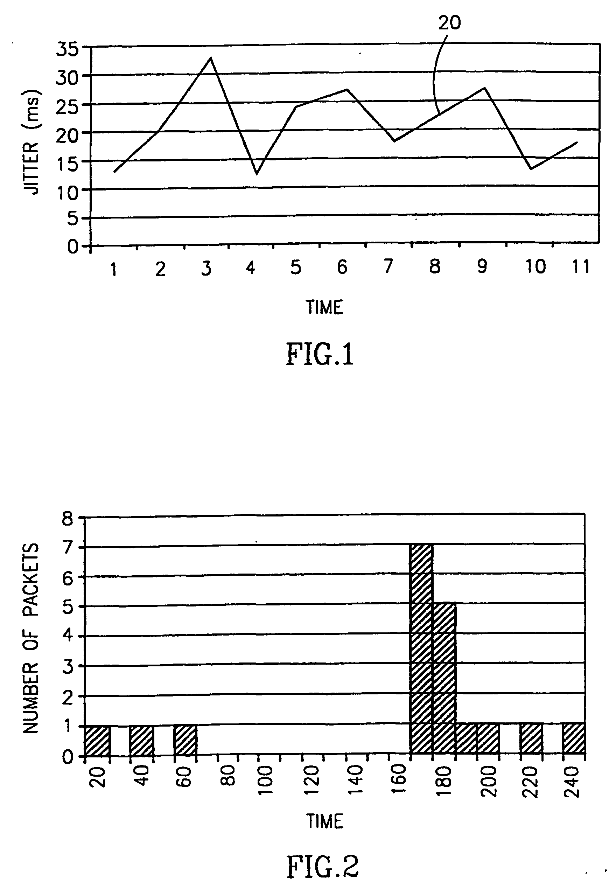

Fig. 1 is exemplary of jitter in a network, for example, the Internet. In this Figure, jitter is shown as a line 20. Accordingly, the size of the jitter buffer may be set to 30 milliseconds, to accommodate this jitter.

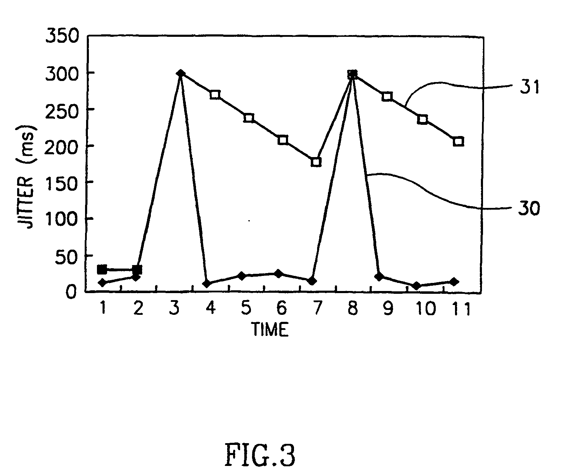

Jitter buffer size is typically set in accordance with a bit rate of transferred audio packets. Changes in jitter buffer size effect audio quality. In particular, reducing jitter buffer size reduces delay of playing audio packets, but causes breaks in the audio transmission, when the amount of audio packets transmitted exceeds jitter buffer size. Oppositely, increasing jitter buffer size helps to inhibit breaks in the audio, but increases delay. The balance between audio break-up and delay is easily established in stable networks. This is not so for unstable networks such as the Internet, that may have bursts, also known as burst periods, where large numbers of packets are transmitted in extremely short time segments, as detailed in Fig. 2. These bursts result in spikes on a chart of network behavior, such as that detailed in Fig. 3, with the spikes occurring at time intervals 3 and 8.

Fig. 2 details an unstable network, such as the Internet, represented by the number of packets versus time (in milliseconds). Here, single packets of time length 10 are transmitted in equal intervals from transmission times 20, 40 and 60, in a "normal" transmission. Between time 70 and time 170, there is a silence period. This silence period may be due to many factors, one common factor being that one of the routers along the packet transmission path is busy. As a result, a transmission of 7 packets, beginning at time 170, is immediately followed, at time 180, by a transmission of five packets, followed immediately by single packet transmissions at times 190 and 200. This rapid transmission of a large number of packets is exemplary of a burst, or burst period (between times 170 and 210). Packet transmission returns to "normal" at time 220.

Fig. 3 shows two bursts (burst periods) graphically, along line 30 (formed of diamond shaped points) as spikes, occurring between time interval 2 and 4 and time interval 7-9. In this unstable network, exemplary of unstable networks, jitter buffer size, line 31 (formed of square shaped points) is continuously increased and reduced in size to keep the delay low, or alternately increase the delay, in order to overcome a burst of packets.

A major drawback to contemporary systems and methods for adjusting jitter buffer size is that these systems and methods do not distinguish between jitter and spikes, and thus, treat them similarly. When coupled with typical methods and systems that adjust jitter buffer size, some packets never arrive at the receiver or arrive incompletely. This results in insufficient audio quality.

US-A-4453247 discloses a method for controlling jitter buffer size for a jitter buffer of a communication device for communication with a network, the method comprising the steps of monitoring said network (100) for at least one burst period, wherein said at least one burst period is a packet reception period during which a large number of packets are received in a small time segment relative to packets received during non-burst packet reception periods.

The present invention is characterised by determining a likelihood for at least one subsequent burst period from said at least one burst period ; and adjusting said jitter buffer (112) size based on said likelihood for said at least one subsequent burst period.

The present invention improves on the prior art jitter buffer control mechanisms by providing methods and apparatus for adjusting jitter buffer size of audio transceivers for unstable networks. These methods involve estimating jitter buffer size based on the likelihood of a burst period by analyzing the receipt of network packets, with the apparatus including hardware and software for performing the same. The present invention operates by distinguishing burst periods from jitter, and adjusting the jitter buffer differently to accommodate these burst periods when compared to adjustments for jitter.

The present invention is directed to a method for controlling jitter buffer size for a jitter buffer of a communication device for communication with a network. This method comprises the steps of monitoring the network for at least one .burst period, where a large number of data packets or packets are transmitted rapidly, and then determining a likelihood for at least one subsequent burst period from this at least one burst period. The jitter buffer size is then adjusted based on the likelihood of this subsequent burst period.

The method, also includes measuring a time to play for each packet received at a predetermined location and building a time to play statistic by creating at least two statistics from each of the received packets from at least two predetennined time intervals. Width and offset values are then calculated from each of the at least two statistic, and from these calculated values, the likelihood of the at least one subsequent burst can be determined.

The present invention is also directed to an audio receiver for use with a network, such as the Internet, having a jitter buffer and a controller for controlling jitter buffer size. The controller preferably includes a microprocessor or other similar computing means, programmed to monitor the network for at least one burst period and adjust the jitter buffer size (by signaling the jitter buffer) based on the monitoring of the network for at least one burst period, to accommodate packet transmissions in a burst period.

The present invention will be described with reference to the accompanying drawings, wherein like reference numerals and/or characters identify corresponding or like components. In the drawings:

Fig. 1 is a chart of jitter versus time in a communication network;
Fig. 2 is a chart of number of packets versus time to illustrate a burst or burst period ;
Fig. 3 is a chart detailing the operation of prior art jitter buffer control mechanisms and methods;
Fig. 4a is a diagram of an exemplary network environment of the present invention ;
Fig. 4b is a diagram of the terminal of the present invention;
Fig. 5 is a flow chart detailing the method of the present invention;
Fig. 6 is a diagram useful in understanding the present invention and determining the Time To Play (TTP) for each packet;
Fig. 7 is a Table of a TTP statistic in accordance with the present invention;
Figs. 8 and 9 are charts detailing the operation of the jitter buffer and control mechanisms of the present invention as compared to those of the prior art;
Fig. 10A to 10D is a table based on a TTP statistic for an Example of the present invention; and
Fig. 11 is chart of jitter buffer size (in milliseconds) versus time (time intervals at which a TTP statistic was analyzed) comparing the present invention to the conventional art, for the Example of the Present Invention.

There is also included Appendix A, a computer program.

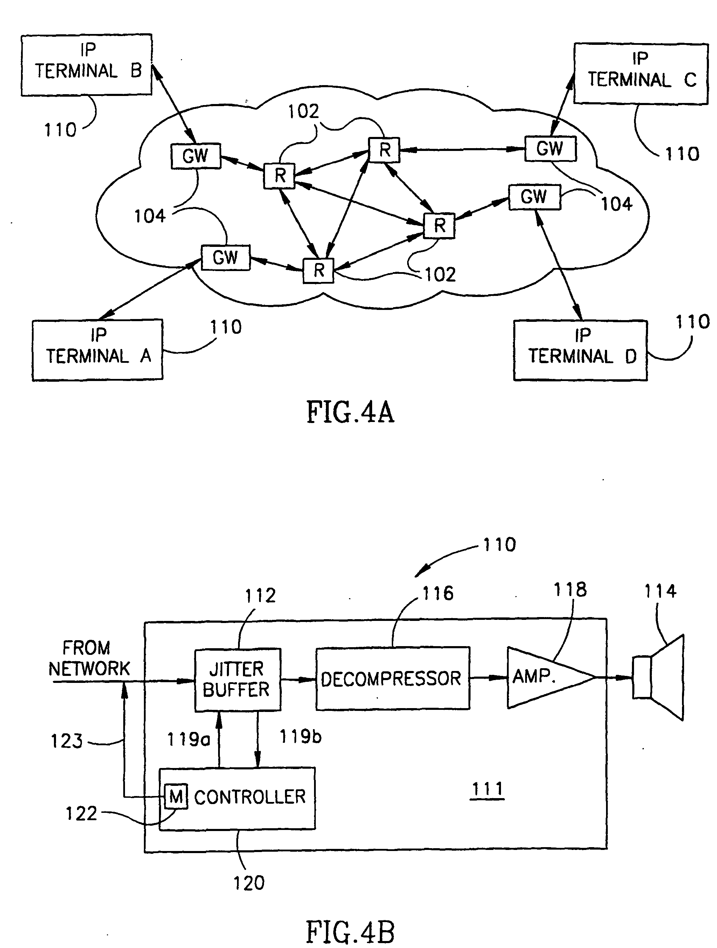

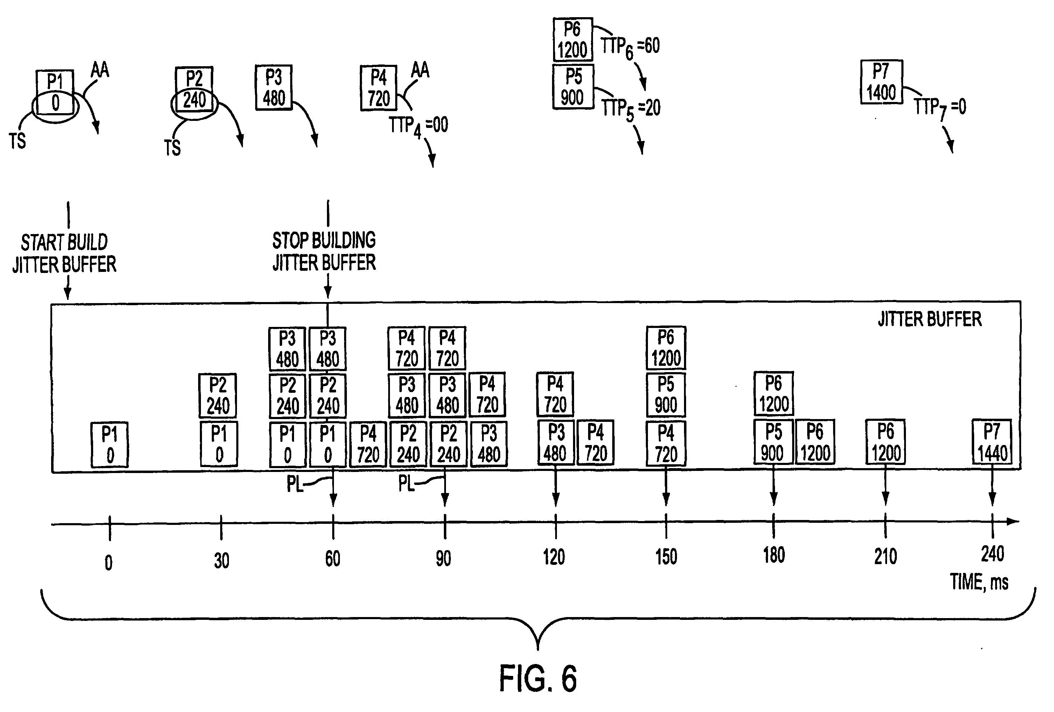

Reference is now made to Fig. 4a, which is shows the environment for the present invention, i. e., a network 100, the Internet being an example of one such network. Within the network 100 are various routers (R) 102 and gateways (GW) 104, linked in a networked arrangement. Various communication devices, such as Internet Protocol (IP) terminals 110 are linked to the network 100 through gateways 104. Data packets, including audio packets, hereinafter "packets" travel over the network 100.

Fig. 4b shows a receiver section 111 (or receiver) of an IP terminal 110 in accordance with the present invention. This receiver 111 is preferably an audio receiver, and includes a jitter buffer 112 linked to a speaker 114 or the like, via a decompressor 116 and an amplifier 118. The jitter buffer is also linked (by wired or wireless links 119a, 119b) to a controller 120, that controls (adjusts) the size of the jitter buffer.

The jitter buffer 112 can be any conventional jitter buffer, for accommodating these packets, and for example, may be the jitter buffer detailed in U.S. Patent No. 5,825,771. The decompressor 116 and amplifier 118 may also be conventional devices. The speaker 114, can be a conventional speaker and can be one associated with a personal computer (PC) designed to handle telephonic applications.

The controller 120, as detailed above, is preferably computer or microprocessor controlled. The controller 120 preferably includes, or alternately is linked to, a microprocessor (not shown) or other similar computing or processor means, for running software, as well as performing other computing functions, so as to signal or otherwise control the controller 120, to properly adjust (increase or decrease) or maintain the size of the jitter buffer 112. There may also be a storage unit for data and hardware associated with these microprocessor or other similar computing or processor means.

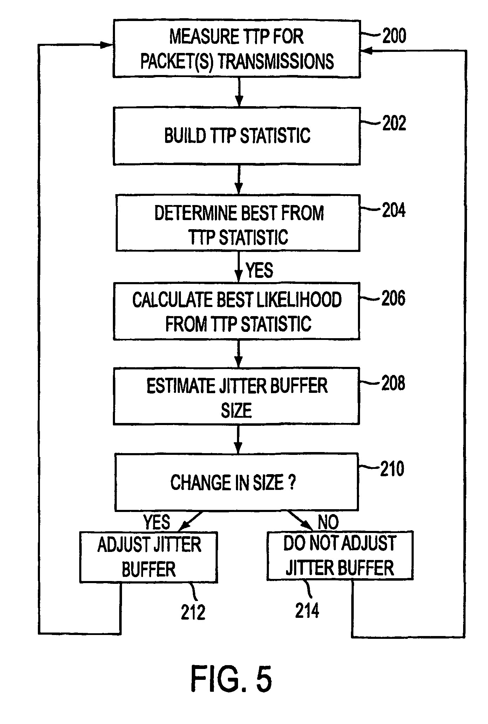

The method of the present invention is performed as follows and may include software and additional hardware in addition to the hardware detailed above. This method is detailed in Fig. 5 in the form of a flow chart.

Initially, at step 200, the Time To Play (TTP) for each packet is measured. Here TTP is defined as the amount of time a packet (regardless of the number of frames contained therein) of any size will wait in the jitter buffer 112 to be played. TTP for packets is measured by monitoring the network (including monitoring for bursts or burst periods as detailed below), this monitoring typically performed by monitoring means (M) 122, including hardware, software or combinations thereof in the controller 120. For example, the monitoring means 122 may include single or multiple samplers that monitor input to the receiver 111 from the network along the arrow 123.

Typically, the TTP for each of the packets is determined when packets are received at any designated location. When a packet is received, it typically has a time stamp and a sequence number, as detailed in RFC 1889, at Chapter 5. TTP can then be measured as a function of the difference in times between timestamps of consecutively sequenced packets and the stamping frequency for the timestamp.

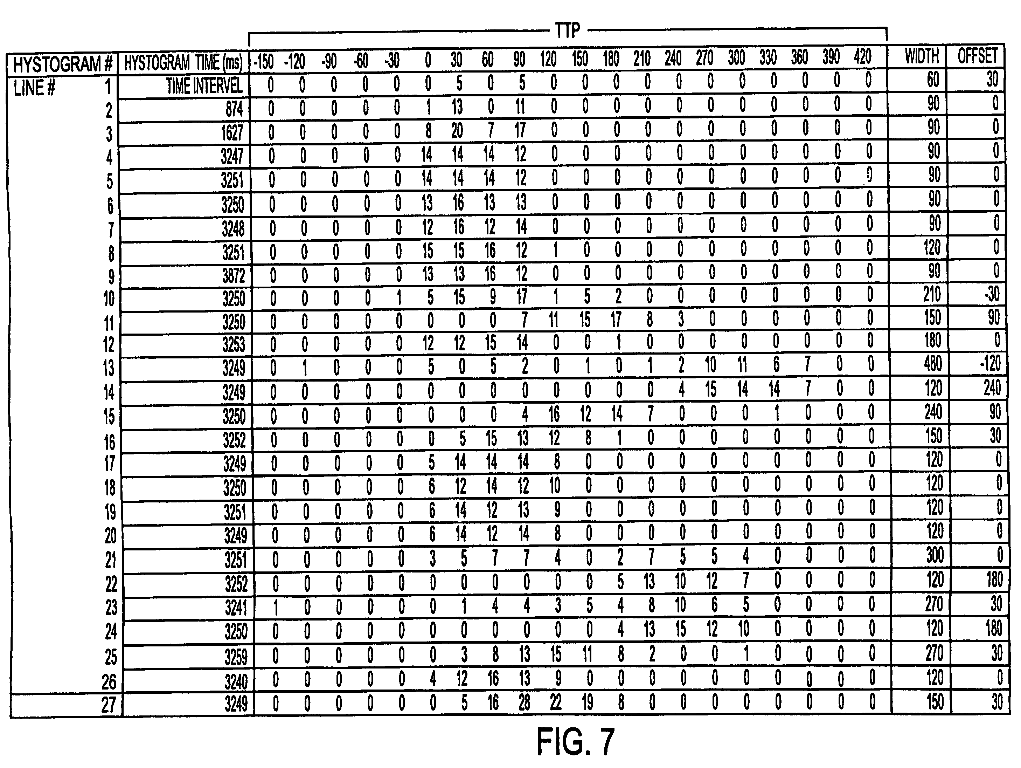

Typically, each terminal 110, has a jitter buffer, to compensate and overcome jitter in the network. Fig. 6 is a diagram for measuring TTP for packets, shown as P1-P7, transmitted in an audio stream, using G 723 codec for audio compression, and decompression for each packet. Each packet P1-P7, also includes a time stamp (in accordance with that detailed above), shown on packet P1, for example, as indicated by the circle labeled TS, that for packet P1 is 0. Similarly, packet P2 has a timestamp of 240 (indicated by the circle labeled TS), etc. Initially, at time 0 ms packets arrive (arrival indicated by the curved arrow AA) at the terminal 110, but are not played directly. Rather, they are delayed in the jitter buffer 112 (Figs. 1 and 2) in order to build the jitter buffer (building starting at time 0 ms).

Starting at time 60 ms, the approximate time when the jitter buffer has been built, packets begin to leave the jitter buffer at constant speed. Accordingly, at every 30 ms interval (30 ms is G.723 codec frame size), the next packet leaves the jitter buffer. Once a packet leaves the jitter buffer, and is received at a reference point along the audio stream, the packet size may be estimated. Size of packets is estimated based on knowing that G. 723 codec has an 8000 Hz sampling rate, such that the size of a packet (Pn) is estimated by the following equation:

$$Pn = (TS_{Pn+1} - TS_{Pn}) / CSR \qquad (1)$$

where,

$TS_{Pn+1}$ is the timestamp of the subsequent packet;

$TS_{Pn}$ is the timestamp of the packet for which measurement is desired; and

CSR is the codec sampling rate (here 8000 Hz).

Employing this equation, P1 packet size is (240-0)/8000 or 30 ms Hz, P2 is 30 ms, etc. Identical calculations may be made for succeeding packets, whereby succeeding packets P3-P7, in this example are 30 ms in size.

With packet size known, and continuing to refer to Fig. 6, time to play (TTP) for each packet can be calculated. As shown in this diagram, packets leave the jitter buffer every 30 ms, after time 60 ms (packets leaving being indicated by the arrows PL). Specifically, packet P1, with a time stamp of 0 ms leaves the jitter buffer and is played at time 60 ms, packet P2, with a time stamp of 240 ms leaves the jitter buffer and is played at time 90 ms, P3, with a time stamp of 480 ms leaves the jitter buffer and is played at time 120 ms, packet P4, with a time stamp of 720 ms leaves the jitter buffer and is played at time 150 ms, packet P5, with a time stamp of 960 ms leaves the jitter buffer and is played at time 180 ms, packet P6, with a time stamp of 1200 ms leaves the jitter buffer and is played at time 210 ms, and packet P7, with a time stamp of 1440 ms leaves the jitter buffer and is played at time 240 ms.

In determining TTP for each packet, the time stamps of the first played packet are subtracted from the time stamp of the newly arrived packet. This result is then divided by the G.723 codec sampling rate (8000 Hz). TTP for each packet (TTP) is expressed by the equation:

$$TTP = (TS_{NA} - TS_{FP}) / CSR \qquad (2)$$

where,

$TS_{NA}$ is the timestamp of the newly arrived packet;

$TS_{FP}$ is the timestamp of the first to play packet; and

CSR is the codec sampling rate.

For example, beginning with packet P4, newly arriving at or shortly after time 60 ms, $TS_{PA}$ is 720 ms (time stamp of P4), $TS_{FTP}$ is 240 ms (timestamp of first to play packet-Packet P2, at time 90 ms-the set time) and CSR is 8000, the G.723 codec sampling rate. Thus, the TTP for packet P4 in accordance with the equation above is (720 ms - 240 ms)/8000 or 0.06 seconds or 60 ms.

Packets P5 (timestamp of 960 ms) and P6 (timestamp of 1200 ms) arrive at or just after time 120 ms (at this time P4-time stamp of 720 ms, is the first to play packet), such that TTP for P5 is (960-720)/8000, or 30 ms, and TTP for P6 is (1200 ms - 720 ms)/8000 or 60 ms. In the case of Packets P5 and P6, that arrive at the same time, their order could be switched, and if so, their TTP's would not be affected by their different arrival order. Similarly, packet P7, with a timestamp of 1440 ms, arrives sometime after time 210 ms, and at set time 240 ms, TTP for P7 is (1440 ms - 1440 ms)/8000 is 0 ms.

This information can then be used in building a TTP statistic, at block 202 of Fig. 5. Specifically, data corresponding to the time interval between time 60 ms and 240 ms for the TTP statistic is as follows:

| TTP | -30 | 0 | 30 | 60 | 90 |
|---|---|---|---|---|---|
| No. Of Packets | 0 | 1 | 1 | 2 | 0 |

In accordance with this TTP statistic, one packet P7 had a TTP of 0 ms, one packet P5 had a TTP of 30 ms, two packets P4 and P6 both had a TTP of 60 ms, and zero packets had a TTP of 90 ms. Negative TTP's (here -30 ms) is assigned to late arriving packets (in the jitter buffer). These packets are not played in the jitter buffer, but the information provided with each late arriving packet is preferably used for increasing jitter buffer size.

These lines (each a TTP statistic) are then built in to a TTP statistic over a time period. Fig. 7 shows a table that is an actual experimentally determined TTP statistic in accordance with the present invention. The number of packets having certain TTP's was evaluated at various intervals, time 0, the 874 ms after time 0, then 1627 ms later (than time 874 ms), then 3247 later (than time 874 ms + time 1627 ms), etc. This TTP statistic is stored in microprocessor memory or other similar memory or storage device (or unit) in the terminal 110, preferably in the controller 120, or external thereto.

Additionally, from this TTP statistic, each line has values known as a "width" and an "offset". The Width is the difference between the largest TTP and the smallest TTP, and the Offset is the lowest TTP where a packet was received. For example, for line "1" (or Histogram #1), the Width is 60 ms; calculated from 90 (5 packets received with TTP of 90 ms) minus 30 (5 packets received with TTP 30 ms) and the Offset is 30 ms, TTP 30 ms being the lowest TTP where a packet(s), (here 5 packets) were received.

With the TTP statistic built, this statistic is analyzed to determine if there is a burst (burst period) in block 204. The determination of the burst or burst period is determined by an analysis of the TTP statistic as bursts or burst periods are functions of above detailed offset and width values.

For example, in the TTP statistic of Fig. 7, lines "12" and "13" (Histogram #s 12 and 13) are indicative of a burst as the difference in width between lines 12 and 13 is 300 (480-line 13 minus 180-tine 12), this width change being greater than approximately 200. Moreover, this burst or burst period is also indicated from lines "13" and "14" (Hystogram # 13 and 14) where the offsets have shifted by approximately 200 or greater (to the right). Specifically the offset has gone from -120 (line 13) to 240 (line 14).

Once there has been a burst, the likelihood of a subsequent burst is calculated from the TTP statistic at block 206. The likelihood of a subsequent burst is also function of the Offset and Width values (detailed above) from the TTP statistic. Generally, the likelihood of a subsequent burst, increases with each burst. The actual analysis for determining the burst or burst period likelihood, is a statistical analysis, in accordance with that detailed in Appendix A below.

With the likelihood of a subsequent burst or bursts calculated, in block 206, the jitter buffer size can be estimated, in block 208, based on this likelihood. The estimated jitter buffer size is determined from a statistical analysis, in accordance with that detailed in Appendix A below. This estimated jitter buffer size and present jitter buffer size, as measured (above) are compared at block 210 (change in size).

If a change in size is to be made, either increasing or decreasing the jitter buffer, at block 212, the controller 120 signals the jitter buffer, that has the corresponding hardware to increase or decrease its size in accordance with the signal from the controller. With the jitter buffer adjusted, the system returns to block 200 to start again. This method can be repeated for as many time intervals as desired.

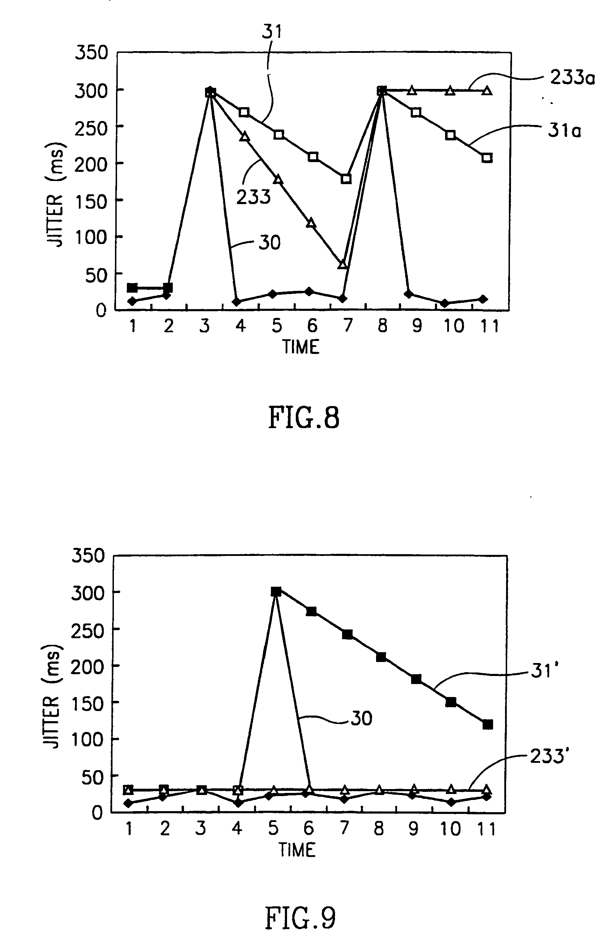

Fig. 8 shows jitter buffer size being adjusted in accordance with the present invention in view of network behavior. Line 30 (formed of diamond shaped points) represents the present invention, and line 31 (formed of square shaped points) represents the prior art jitter buffer size adjustment methods, both as detailed in Fig. 3 above. Here, a first burst or burst period has been detected, at time interval 3. Based on the method detailed above, the likelihood of a second burst has been determined as low. However, at time interval 8, a second burst has been detected, and now, in accordance with the method of the invention, the likelihood for a subsequent burst or burst period is high. Between time intervals 3 and 8 the jitter buffer of the invention, indicated by line 233 formed by triangular shaped points, is adjusted so as to decrease jitter buffer size at a substantially constant rate, until the next, here the second, burst or burst period. This behavior is similar to that of the prior art, in line 31.

After the second burst at time interval 8, the likelihood of a subsequent burst or burst period is highly probable. In accordance with the present invention, the jitter buffer is then kept at the level of the burst or burst period that it was raised to, in order to accommodate the anticipated burst or burst period, as shown by line segment 233a between time intervals 8-11. By remaining at this level, the jitter buffer can accommodate subsequent bursts or burst periods. This is in contrast to the prior art, that again, rises for the burst and then drops immediately at a substantially constant rate (line segment 31a). This immediate drop, serves to immediately decrease jitter buffer size as the prior art can not differentiate between bursts and jitter, and thus, treats all events as jitter. As a result of this failure to keep the jitter buffer at a size large enough to accommodate the subsequent burst or burst periods, the audio transmission experiences substantial breaks.

If a change in size is not made, the jitter buffer is not adjusted, at block 214, and the system returns to block 200 to start again. This is detailed in Fig. 9, where a lonely burst in the network (line 30), shown graphically by a spike at time interval 5, has been detected. With the probability of a second or subsequent burst being low, the jitter buffer size, represented by line 233', formed of triangular shaped points, remains the same. Although some audio is lost as a result of the burst, there is not any reason to raise the jitter buffer since, in accordance with the TTP statistic (detailed above) a subsequent bust or burst period has been determined to be unlikely. This is different than the prior art, shown by line 31' (similar to line 31 detailed above), where the burst or burst period (indicated by the spike) is treated like jitter and thus the buffer automatically adjusts, and is forced to be larger than necessary, between time intervals 6-11, such that audio transmission is delayed.

The above detailed steps, indicated at blocks 204-214 may be performed by an algorithm, identical or similar to that of Appendix A, below. This algorithm could be implemented by software, hardware, or combinations of both in the terminal 110, with the computing devices provided therein.

Example-Jitter Buffer Calculation and Adjustment

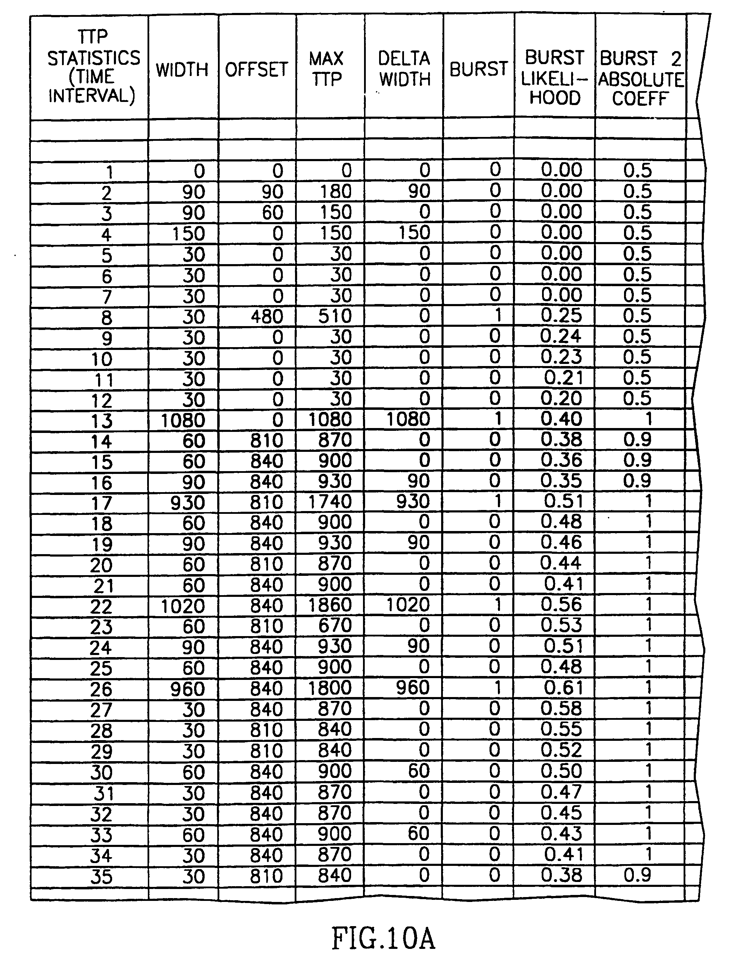

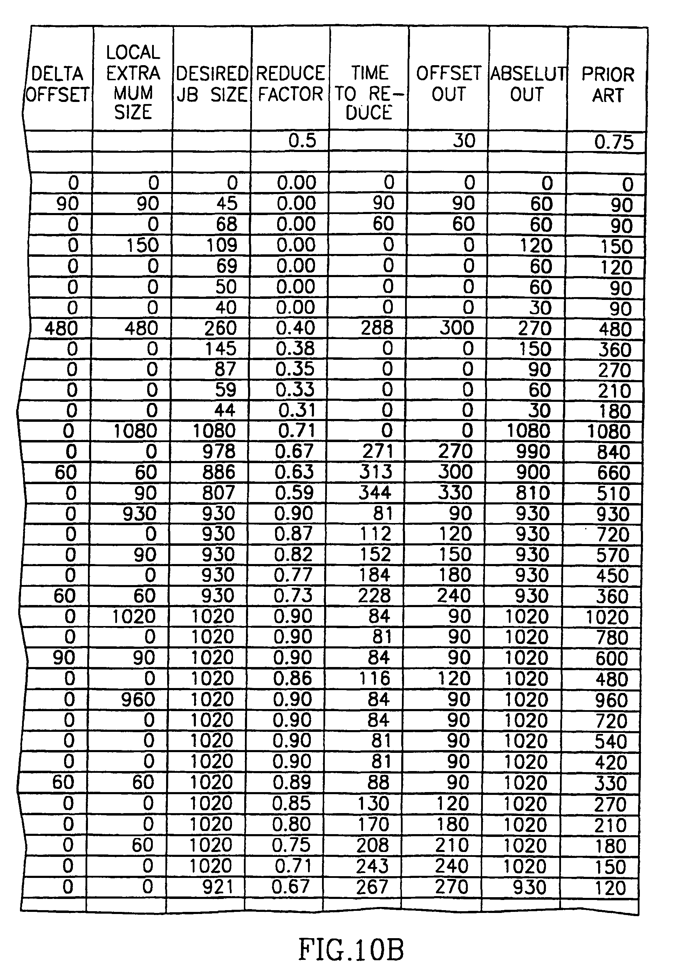

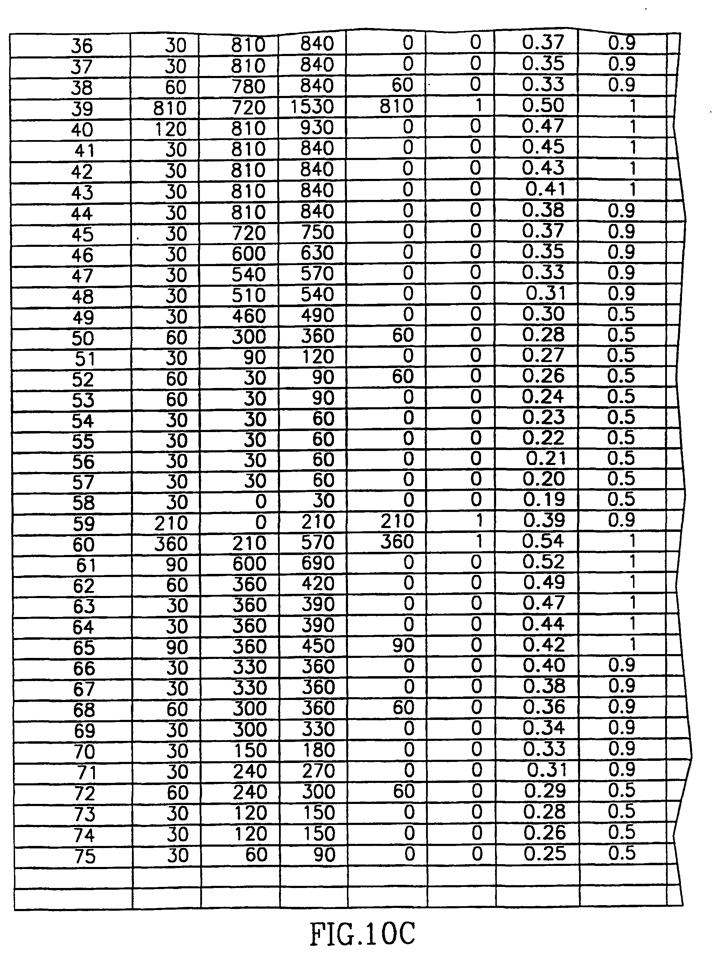

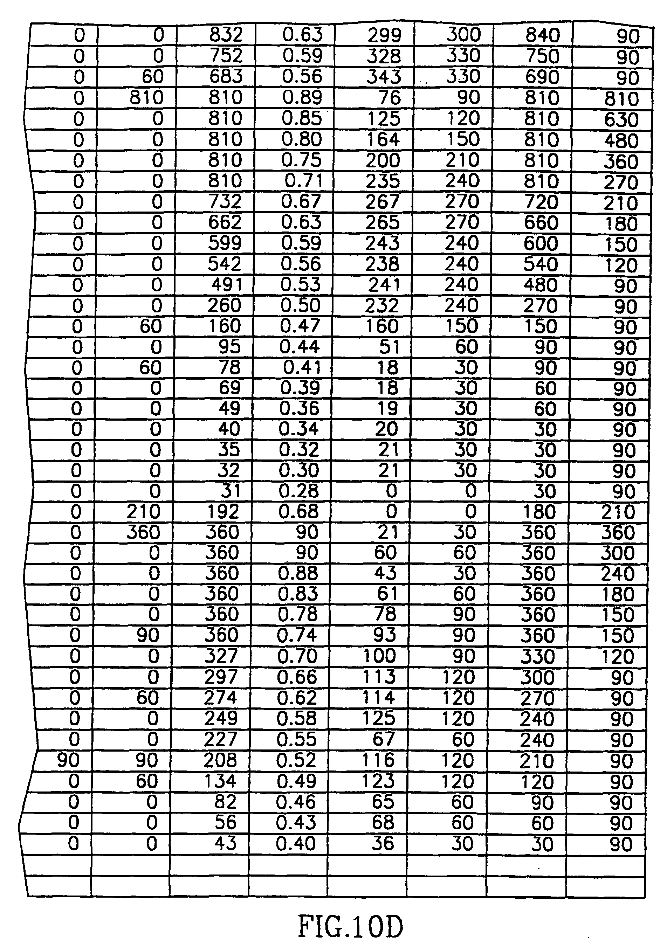

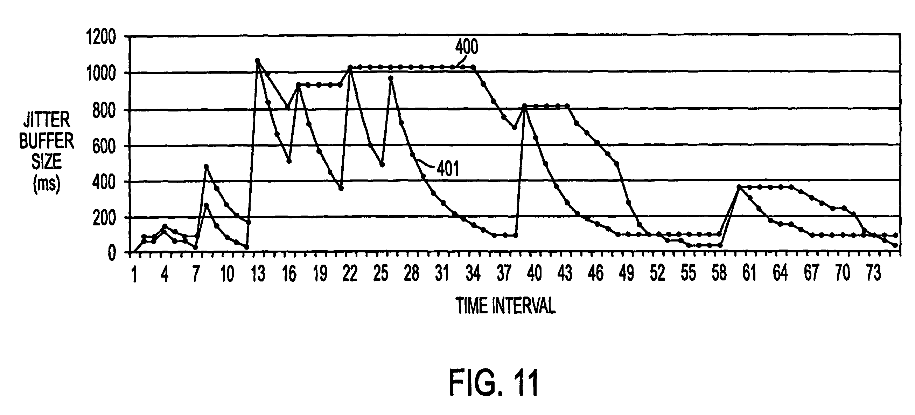

This Example makes reference to Figs. 10A-10D and 11 and the Algorithm of Appendix A, listed as a computer program, for implementation by software. In this example, the present invention was analyzed against prior art jitter buffers and methods for their control from TTP statistics (indicated by TTP statistic # or time interval no., col. 1 of Fig. 10A), each TTP statistic taken at an increasing time interval (this time interval in milliseconds). The results were plotted graphically in Fig. 11, with the present invention formed of diamond shaped points, each point corresponding to a TTP Statistic # (col. 1 of Fig. 10A) and the line formed from these points indicated by the number 400, and the conventional jitter buffer adjustment technique, formed of square shaped points, each point corresponding to a TTP Statistic # and the line formed from these points indicated by the number 401. The values determined in the table of Fig. 10A-10D, were obtained by the algorithm detailed in Appendix A.

At TTP Statistic # 8, a first burst or burst period has been detected. This causes the burst likelihood to increase to 0.25. This is in contrast to the conventional art jitter buffer and control methods therefor, where the jitter buffer is set according to the last (most recent) measurement, resulting in an increased delay. With the present invention, the jitter buffer grows slightly from this point, but remains relatively low, since here, the burst likelihood for a subsequent burst is still low, whereby delay remains low.

A second burst is detected at TTP Statistic #13, increasing the burst likelihood to 0.4. At this TTP statistic, the Burst2AbsolutCoff (from Appendix A and the definitions provided above) (Fig. 10A, col. 8) grows to 1. A third burst is detected at TTP Statistic # 22, and after this third burst, the Burst2AbsoutCoff remains 1 for a substantial time (to TTP Statistic #34). When the Burst2Absoutcoff is "1" and considered to be "high", jitter buffer size is adjusted according to the burst size. The adjustments made grow the jitter buffer to 1080 ms at TTP Statistic 13, and the jitter buffer remains at this size until larger bursts result in jitter buffer growth to 1020 ms, corresponding to TTP Statistic # 22.

At Time 22 on the graph (Fig. 11), corresponding to TTP Statistic # 22, the difference between the invention, line 400 and the conventional art, line 401 is noticeable. In the conventional art, the jitter buffer is reduced after the spike, since there are not any additional spikes until Time 39 (corresponding to TTP Statistic # 39). In accordance with the present invention, as detailed above and Appendix A, jitter buffer size is not reduced, since the burst likelihood is still high, and remains high to about Time 43 (corresponding to TTP Statistic # 43). Moreover, the burst at TTP Statistic # 39 causes little, if any, audio degradation.

With the last large burst occurring at Time 39, subsequent bursts are decreasingly smaller. At Time 39 there is a last large bust, which the conventional art method can not adjust for, and thus causes audio degradation. This is in contrast to the present invention, that adjusts the jitter buffer to accommodate subsequent bursts or burst periods, and substantially reduces audio quality degradation. As the burst or burst periods decrease, the present invention and conventional art behave similarly.

While preferred embodiments of the present invention have been described so as to enable one of skill in the art to practice the present invention, the preceding description is exemplary only, and should not be used to limit the scope of the invention. The scope of the invention should be determined by the following claims.

## APPENDIX A

```
Width is difference between maximum and minimum received during last 3 sec period TTP.
Offset is minimum received TTP.
FrameSizeMS is constant and equals to frame size in milliseconds (for example in G.723 codec it equals to
30)

/* MaxTTPₙ is value of maximum TTP in the statistics */
MaxTTPₙ= Offsetₙ+Widthₙ

/* DeltaWidthₙ may be used in estimating LocalExtremumSizeₙ, when burst in width */
If(Widthₙ>Widthₙ₋₁)
    DeltaWidthₙ=Widthₙ
Else
    DeltaWidthₙ=0

/* WidthBoundₙ is a temporary bound value used for burst detection */
If(Widthₙ₋₁=0)
    WidthBoundₙ =60
Else
    WidthBoundₙ = 3•Widthₙ₋₁

/* Burstₙ is set to 1, when there is a burst detected in current statistics. It is set to 0 otherwise*/
If(
    or Widthₙ-Widthₙ₋₁ >200ms
    or Widthₙ > WidthBoundₙ
    or ((Offsetₙ - Offset ₙ₋₁ > 200ms) and (MaxTTPₙ-MaxTTPₙ₋₁>200ms))
    or (Offsetₙ - Offset ₙ₋₁) > 3•min(Widthₙ, Width ₙ₋₁)
   )
    Burstₙ=1
Else
    Burstₙ=0;

/* BurstLikelihood reflects likelihood of burst. When it is close to 0, we have low burst likelihood. When
it is close to 1, we have high burst likelihood */
If(Burstₙ=1)
    BurstLikelihoodₙ = BurstLikelihood ₙ₋₁ * 0.75 + 0.25
Else
    BurstLikelihoodₙ = BurstLikelihood ₙ₋₁ * 19/20
```

```
/* Burst2AbsoluteCoef is jitter buffer adaptation factor. When it is close to 1, jitter buffer size is
close to average burst size and reduced slow. When it is close to 0, it is reduced fast. It set to:
        0.5 in not bursty environment
        0.9 when there is a medium burst likelihood
        1.0 when there is a very high burst likelihood */
If(BurstLikelihood_n<0.3)
        Burst2AbsoluteCoef_n=0.5
Else If(BurstLikelihood_n<0.4)
        Burst2AbsoluteCoef_n=0.9
Else

        Burst2AbsoluteCoef_n=1


/* DeltaOffset is a temporary value used in estimation of desired jitter buffer change
(LocalExtremumSize)*/
If(Offset_n>0 and Offset_n > Offset_{n-1} and Burst_n=0)
        DeltaOffset_n = max(Width_n, Offset_n - Offset_{n-1})
Else

        DeltaOffset_n =0


/* LocalExtremumSize_n is maximum growth between Width and Offset growthes. */
LocalExtremumSize_n=max(DeltaWidth_n, DeltaOffset_n)


/* DesiredJitterBufferSize reflects what is expected burst length */
if (DesiredJitterBufferSize_{n-1} < LocalExtremumSize_n)
        DesiredJitterBufferSize_n=DesiredJitterBufferSize_{n-1}*(1- Burst2AbsoluteCoef_n)+ LocalExtremumSize_n*
Burst2AbsoluteCoef_n
Else
        DesiredJitterBufferSize_n=DesiredJitterBufferSize_{n-1}*Burst2AbsoluteCoef_n+ Width_n*(1-
Burst2AbsoluteCoef_n)


/* ReduceFactor tells how fast jitter buffer size should be adjusted to DesiredJitterBufferSize.*/
ReduceFactor_n=max(0, min(BurstLikelihood_n, 0.5)*2-0.1)


/* TimeToReduce tells how much jitter buffer desired to be changed (taking burst into account) */
If(Offset_n>0)
        TimeToReduce_n= Offset_n*(1-ReduceFactor_n)
Else
        TimeToReduce_n= Offset_n


/* OffsetOut is TimeToReduce rounded to multiple of FrameSizeMS. This value tells how much jitter buffer
should be adjusted (relatively to current jitter buffer size). */
OffsetOut_n= FrameSizeMS * round(TimeToReduce_n/FrameSizeMS)


/* OffsetOut is DesiredJitterBufferSize rounded to multiple of FrameSizeMS. It tells absolute size that
jitter buffer should be. This value is used when jitter buffer is build from scratch */
AbsolutOut_n= FrameSizeMS * round (DesiredJitterBufferSize_n/ FrameSizeMS)
```

## Claims

1. A method for controlling jitter buffer size for a jitter buffer of a communication device for communication with a network, the method comprising the steps of:

monitoring said network (100) for at least one burst period, wherein said at least one burst period is a packet reception period during which a large number of packets are received in a small time segment relative to packets received during non-burst packet reception periods; **characterised by**

8

determining a likelihood for at least one subsequent burst period from said at least one burst period ; and adjusting said jitter buffer (112) size based on said likelihood for said at least one subsequent burst period.

**2.** The method of claim 1, wherein said step of adjusting said jitter buffer (112) size is in accordance with the detection of said at least one subsequent burst period.

**3.** The method of claim 1, wherein said step of monitoring said network includes:

measuring a time to play for each packet received at a predetermined location during each of at least two predetermined time intervals, said time to play being determined as a function of a time stamp for said packet, a timestamp for a first-to-play packet in an associated one of said at least two predetermined time intervals, and a sampling rate;

building a time to play statistic based on at least two time to play measurements made during each of said at least two predetermined time intervals;

calculating width and offset values from each of said at least two time to play measurements for each of said at least two time intervals, wherein the width values are each determined as a difference between a largest time to play measurement and a smallest time to play measurement in an associated one of the at least two predetermined time intervals, and the offset values are each determined as the smallest time to play measurement in an associated one of the at least two time intervals; and

determining said likelihood of said at least one subsequent burst period from said calculated widths and offsets values.

**4.** The method of claim 2, wherein said step of adjusting said jitter buffer (112) size includes, estimating said jitter buffer (112) size and adjusting said jitter buffer (112) size in accordance with said estimate.

**5.** The method of claim 1, wherein said step of monitoring said network (100) for said at least one burst period includes monitoring said network for one burst period.

**6.** The method of claim 3, wherein said step of determining said likelihood of said at least one subsequent burst period includes performing a statistical analysis of said at least one subsequent burst period.

**7.** The method of claim 1, wherein the determining step further comprising the steps of:

building a time to play statistic based on at least two time to play measurements made for at least two received packets from at least two predetermined time intervals, said time to play measurements being determined as a function of a timestamp for each received packet, a timestamp for a first-to-play packet in an associated one of said at least two predetermined time intervals, and a sampling rate;

calculating the width and offset values from each of said at least two time to play measurements for each of said at least two predetermined time intervals, wherein the width values are each determined as a difference between a largest time to play measurement and a smallest time to play measurement in an associated one of the at least two predetermined time intervals, and the offset values are each determined as the smallest time to play measurement in an associated one of the at least two predetermined time intervals; and

determining the likelihood of at least one subsequent burst period based on said calculated width and said calculated offset values, provided there has been said at least one burst period.

**8.** The method of claim 7, additionally comprising:

building said jitter buffer (112) to accommodate said data packet transmissions of said at least one subsequent burst period in accordance with said estimate.

**9.** An audio receiver comprising:

a jitter buffer (112);

means (122) for monitoring a network (100) for at least one burst period, wherein said at least one burst period is a packet transmission period during which a large number of packets are transmitted in a small time segment relative to other packet transmission periods; and

means (120) for adjusting a size of said jitter buffer (112) by:

determining a likelihood for at least one subsequent burst period from said at least one burst period; and adjusting said jitter buffer (112) size based on said likelihood for said at least one subsequent burst period.

**10.** The audio receiver of claim 9, wherein said audio receiver comprises a controller (120) programmed to provide said network monitoring means (122) and said adjusting means.

**11.** The audio receiver of claim 10, additionally comprising a storage unit in operative communication with said controller.

**12.** The audio receiver of claim 11, additionally comprising a decompressor (116) in communication with said jitter buffer (112).

**13.** The audio receiver of claim 12, additionally comprising an amplifier (118) in communication with said decompressor (116).

**Patentansprüche**

**1.** Verfahren zum Steuern einer Jitterpuffergröße für einen Jitterpuffer einer Kommunikationseinrichtung zur Kommunikation mit einem Netz, wobei das Verfahren die folgenden Schritte umfasst:

Überwachen des Netzes (100) für wenigstens eine Burstperiode, wobei die wenigstens eine Burstperiode eine Paketempfangsperiode ist, während der eine große Anzahl von Paketen in einem kleinen Zeitsegment relativ zu Paketen, die während Nicht-Burstpaket-Empfangsperioden empfangen werden, empfangen werden; **gekennzeichnet durch**:

Bestimmen einer Wahrscheinlichkeit für wenigstens eine nachfolgende Burstperiode von der wenigsten einen Burstperiode; und
Einstellen der Größe des Jitterpuffers (112) auf Grundlage der Wahrscheinlichkeit für die wenigstens eine nachfolgende Burstperiode.

**2.** Verfahren nach Anspruch 1, wobei der Schritt zum Einstellen der Größe des Jitterpuffers (112) in Übereinstimmung mit der Erfassung der wenigstens einen nachfolgenden Burstperiode ist.

**3.** Verfahren nach Anspruch 1, wobei der Schritt zum Überwachen des Netzes einschließt:

Messen einer Zeit zum Spielen für jedes Paket empfangen an einem vorgegebenen Ort während jedem von wenigstens zwei vorgegebenen Zeitintervallen, wobei die Zeit zum Spielen als ein Funktion eines Zeitstempels für das Paket, eines Zeitstempels für ein zuerst-zu-spielendes Paket in einem zugehörigen der wenigstens zwei vorgegebenen Zeitintervallen, und einer Abtastrate bestimmt wird;
Aufbauen einer Zeit zum Spielen Statistik auf Grundlage von wenigstens zwei Zeit zum Spielen Messungen, die während jedem der wenigstens zwei vorgegebenen Zeitintervalle durchgeführt werden;
Berechnen von Breiten- und Versatz-Werten von jeder der wenigstens zwei Zeit zum Spielen Messungen für jedes der wenigstens zwei Zeitintervalle, wobei die Breiten-Werte jeweils als eine Differenz zwischen einer größten Zeit zum Spielen Messung und einer kleinsten Zeit zum Spielen Messung in einem zugehörigen einen der wenigstens zwei vorgegebenen Zeitintervalle bestimmt werden, und die Versatz-Werte jeweils als die kleinste Zeit zum Spielen Messung in einem zugehörigen einen der wenigstens zwei Zeitintervalle jeweils bestimmt werden; und
Bestimmen der Wahrscheinlichkeit der wenigstens einen nachfolgenden Burstperiode aus den berechneten Breiten- und Versatzwerten.

**4.** Verfahren nach Anspruch 2, wobei der Schritt zum Einstellen der Größe des Jitterpuffers (112) ein Abschätzen der Größe des Jitterpuffers (112) und ein Einstellen der Größe des Jitterpuffers (112) in Übereinstimmung mit der Abschätzung einschließt.

**5.** Verfahren nach Anspruch 1, wobei der Schritt zum Überwachen des Netzes (100) für die wenigstens eine Burstperiode ein Überwachen des Netzes für eine Burstperiode einschließt.

**6.** Verfahren nach Anspruch 3, wobei der Schritt zum Bestimmen der Wahrscheinlichkeit der wenigstens einen nachfolgenden Burstperiode ein Ausführen einer statistischen Analyse der wenigstens einen nachfolgenden Burstperiode einschließt.

**7.** Verfahren nach Anspruch 1, wobei der Bestimmungsschritt ferner die folgenden Schritte umfasst:

Aufbauen einer Zeit zum Spielen Statistik auf Grundlage von wenigstens zwei Zeit zum Spielen Messungen durchgeführt für wenigstens zwei empfangene Pakete von wenigstens zwei vorgegebenen Zeitintervallen, wobei die Zeit zum Spielen Messungen als eine Funktion eines Zeitstempels für jedes empfangene Paket, eines Zeitstempels für ein zuerst-zu-spielendes Paket in einem zugehörigen einen der wenigstens zwei vorgegebenen Zeitintervalle, und einer Abtastrate bestimmt werden;
Berechnen der Breiten- und Versatz-Werte von jeder der wenigstens zwei Zeit zum Spielen Messungen für jedes der wenigstens zwei vorgegebenen Zeitintervalle, wobei die Breiten-Werte jeweils als eine Differenz zwischen einer größten Zeit zum Spielen Messung und einer kleinsten Zeit zum Spielen Messung in einem zugehörigen einen der wenigstens zwei vorgegebenen Zeitintervalle bestimmt werden, und die Versatz-Werte jeweils als die kleinste Zeit zum Spielen Messung in einem zugehörigen der wenigstens zwei vorgegebenen Zeitintervalle bestimmt werden; und
Bestimmen der Wahrscheinlichkeit von wenigstens einer nachfolgenden Burstperiode auf Grundlage der berechneten Breite- und der berechneten Versatz-Werte, vorausgesetzt, dass die wenigstens eine Burstperiode gewesen ist.

**8.** Verfahren nach Anspruch 7, zusätzlich umfassend die folgenden Schritte:

Aufbauen des Jitterpuffers (112), um die Datenpaketübertragungen von der wenigstens einen nachfolgenden Burstperiode in Übereinstimmung mit der Abschätzung unterzubringen.

**9.** Audioempfänger, umfassend:

einen Jitterpuffer (112);
eine Einrichtung (122) zum Überwachen eines Netzes (100) für wenigstens eine Burstperiode, wobei die wenigstens eine Burstperiode eine Paketübertragungsperiode ist, während der eine große Anzahl von Paketen in einem kleinen Zeitsegment relativ zu anderen Paketübertragungsperioden übertragen werden; und
eine Einrichtung (120) zum Einstellen einer Größe des Jitterpuffers (112) durch:

Bestimmen einer Wahrscheinlichkeit für wenigstens eine nachfolgende Burstperiode von der wenigstens einen Burstperiode; und
Einstellen der Größe des Jitterpuffers (112) auf Grundlage der Wahrscheinlichkeit für die wenigstens eine nachfolgende Burstperiode.

**10.** Audioempfänger nach Anspruch 9, wobei der Audioempfänger einen Controller (120) umfasst, der programmiert ist, um die Netzüberwachungseinrichtung (122) und die Einstelleinrichtung bereitzustellen.

**11.** Audioempfänger nach Anspruch 10, zusätzlich umfassend eine Speichereinheit in einer betriebsmäßigen Kommunikation mit dem Controller.

**12.** Audioempfänger nach Anspruch 11, zusätzlich umfassend einen Dekompressor (116) in Kommunikation mit dem Jitterpuffer (112).

**13.** Audioempfänger nach Anspruch 12, zusätzlich umfassend einen Verstärker (118) in Kommunikation mit dem Dekompressor (116).


**Revendications**

**1.** Procédé pour contrôler ou commander une dimension de tampon d'instabilité pour un tampon d'instabilité d'un dispositif de communication pour communiquer avec un réseau, le procédé comprenant les étapes de:

surveillance dudit réseau (100) pendant au moins une période de salve, dans lequel ladite au moins une période de salve est une période de réception de paquets pendant laquelle un grand nombre de paquets sont reçus dans un petit segment temporel par rapport à des paquets qui sont reçus pendant des périodes de réception de paquets de non salve,

**caractérisé par**:

la détermination d'une probabilité pendant au moins une période de salve suivante à partir de ladite au moins une période de salve; et
le réglage de ladite dimension de tampon d'instabilité (112) sur la base de ladite probabilité pendant ladite au moins une période de salve suivante.

2. Procédé selon la revendication 1, dans lequel ladite étape de réglage de ladite dimension de tampon d'instabilité (112) est conformément à la détection de ladite au moins une période de salve suivante.

3. Procédé selon la revendication 1, dans lequel ladite étape de surveillance dudit réseau inclut:

la mesure d'un temps pour lire chaque paquet qui est reçu en une localisation prédéterminée pendant chacun d'au moins deux intervalles prédéterminés, ledit temps pour lire étant déterminé en tant que fonction d'un timbre temporel pour ledit paquet, d'un timbre temporel pour un paquet à lire en premier dans l'un associé desdits au moins deux intervalles temporels prédéterminés et d'une fréquence d'échantillonnage;
la construction d'une statistique de temps pour lire sur la base d'au moins deux mesures de temps pour lire qui sont réalisées pendant chacun desdits au moins deux intervalles temporels prédéterminés;
le calcul de valeurs de largeur et de décalage à partir de chacune desdites au moins deux mesures de temps pour lire pendant chacun desdits au moins deux intervalles temporels, où les valeurs de largeur sont chacune déterminées en tant que différence entre une mesure de temps pour lire la plus grande et une mesure de temps pour lire la plus petite dans l'un associé des au moins deux intervalles temporels prédéterminés, et les valeurs de décalage sont chacune déterminées en tant que mesure de temps pour lire la plus petite dans l'un associé des au moins deux intervalles temporels; et
la détermination de ladite probabilité de ladite au moins une période de salve suivante à partir desdites valeurs de largeur et de décalage calculées.

4. Procédé selon la revendication 2, dans lequel ladite étape de réglage de ladite dimension de tampon d'instabilité (112) inclut l'estimation de ladite dimension de tampon d'instabilité (112) et le réglage de ladite dimension de tampon d'instabilité (112) conformément à ladite estimation.

5. Procédé selon la revendication 1, dans lequel ladite étape de surveillance dudit réseau (100) pendant ladite au moins une période de salve inclut la surveillance dudit réseau pendant une période de salve.

6. Procédé selon la revendication 3, dans lequel ladite étape de détermination de ladite probabilité de ladite au moins une période de salve suivante inclut la réalisation d'une analyse statistique de ladite au moins une période de salve suivante.

7. Procédé selon la revendication 1, dans lequel ladite étape de détermination comprend en outre les étapes de:

élaboration d'une statistique de temps pour lire sur la base d'au moins deux mesures de temps pour lire qui sont réalisées pour au moins deux paquets reçus en provenance d'au moins deux intervalles temporels prédéterminés, lesdites mesures de temps pour lire étant déterminées en tant que fonction d'un timbre temporel pour chaque paquet reçu, d'un timbre temporel pour un paquet à lire en premier dans l'un associé desdits au moins deux intervalles temporels prédéterminés et d'une fréquence d'échantillonnage;
calcul des valeurs de largeur et de décalage à partir de chacune desdites au moins deux mesures de temps pour lire pendant chacun desdits au moins deux intervalles temporels prédéterminés, où les valeurs de largeur sont chacune déterminées en tant que différence entre une mesure de temps pour lire la plus grande et une mesure de temps pour lire la plus petite dans l'un associé des au moins deux intervalles temporels prédéterminés, et les valeurs de décalage sont chacune déterminées en tant que mesure de temps pour lire la plus petite dans l'un associé des au moins deux intervalles temporels prédéterminés; et
détermination de la probabilité d'au moins une période de salve suivante sur la base desdites valeurs de largeur et de décalage calculées pourvu qu'il y ait eu ladite au moins une période de salve.

**8.** Procédé selon la revendication 7, comprenant additionnellement:

l'élaboration dudit tampon d'instabilité (112) pour adapter lesdites transmissions de paquets de données de ladite au moins une période de salve suivante conformément à ladite estimation.

**9.** Récepteur audio comprenant:

un tampon d'instabilité (112);
un moyen (122) pour surveiller un réseau (100) pendant au moins une période de salve, dans lequel ladite au moins une période de salve est une période de transmission de paquets pendant laquelle un grand nombre de paquets sont transmis dans un petit segment temporel par rapport à d'autres périodes de transmission de paquets; et
un moyen (120) pour régler une dimension dudit tampon d'instabilité (112) en:

déterminant une probabilité pendant au moins une période de salve suivante à partir de ladite au moins une période de salve; et en
réglant la dimension dudit tampon d'instabilité (112) sur la base de ladite probabilité pendant ladite au moins une période de salve suivante.

**10.** Récepteur audio selon la revendication 9, dans lequel ledit récepteur audio comprend un contrôleur (120) qui est programmé pour constituer ledit moyen de surveillance de réseau (122) et ledit moyen de réglage.

**11.** Récepteur audio selon la revendication 10, comprenant additionnellement une unité de stockage en communication de fonctionnement avec ledit contrôleur.

**12.** Récepteur audio selon la revendication 11, comprenant additionnellement un décompresseur (116) en communication avec ledit tampon d'instabilité (112).

**13.** Récepteur audio selon la revendication 12, comprenant additionnellement un amplificateur (118) en communication avec ledit décompresseur (116).

FIG.1

FIG.2

FIG.3

FIG.4A

FIG.4B

FIG. 6

FIG. 5

| HYSTOGRAM # | HYSTOGRAM TIME (ms) | TTP | | | | | | | | | | | | | | | | | | | WIDTH | OFFSET |
|---|---|---|---|---|---|---|---|---|---|---|---|---|---|---|---|---|---|---|---|---|---|---|---|
| | | -150 | -120 | -90 | -60 | -30 | 0 | 30 | 60 | 90 | 120 | 150 | 180 | 210 | 240 | 270 | 300 | 330 | 360 | 390 | 420 | | |
| LINE # 1 | TIME INTERVEL | 0 | 0 | 0 | 0 | 0 | 0 | 5 | 0 | 5 | 0 | 0 | 0 | 0 | 0 | 0 | 0 | 0 | 0 | 0 | 0 | 60 | 30 |
| 2 | 874 | 0 | 0 | 0 | 0 | 0 | 1 | 13 | 0 | 11 | 0 | 0 | 0 | 0 | 0 | 0 | 0 | 0 | 0 | 0 | 0 | 90 | 0 |
| 3 | 1627 | 0 | 0 | 0 | 0 | 0 | 8 | 20 | 7 | 17 | 0 | 0 | 0 | 0 | 0 | 0 | 0 | 0 | 0 | 0 | 0 | 90 | 0 |
| 4 | 3247 | 0 | 0 | 0 | 0 | 0 | 14 | 14 | 14 | 12 | 0 | 0 | 0 | 0 | 0 | 0 | 0 | 0 | 0 | 0 | 0 | 90 | 0 |
| 5 | 3251 | 0 | 0 | 0 | 0 | 0 | 14 | 14 | 14 | 12 | 0 | 0 | 0 | 0 | 0 | 0 | 0 | 0 | 0 | 0 | 0 | 90 | 0 |
| 6 | 3250 | 0 | 0 | 0 | 0 | 0 | 13 | 16 | 13 | 13 | 0 | 0 | 0 | 0 | 0 | 0 | 0 | 0 | 0 | 0 | 0 | 90 | 0 |
| 7 | 3248 | 0 | 0 | 0 | 0 | 0 | 12 | 16 | 12 | 14 | 0 | 0 | 0 | 0 | 0 | 0 | 0 | 0 | 0 | 0 | 0 | 90 | 0 |
| 8 | 3251 | 0 | 0 | 0 | 0 | 0 | 15 | 15 | 16 | 12 | 1 | 0 | 0 | 0 | 0 | 0 | 0 | 0 | 0 | 0 | 0 | 120 | 0 |
| 9 | 3872 | 0 | 0 | 0 | 0 | 0 | 13 | 13 | 16 | 12 | 0 | 0 | 0 | 0 | 0 | 0 | 0 | 0 | 0 | 0 | 0 | 90 | 0 |
| 10 | 3250 | 0 | 0 | 0 | 0 | 1 | 5 | 15 | 9 | 17 | 1 | 5 | 2 | 0 | 0 | 0 | 0 | 0 | 0 | 0 | 0 | 210 | -30 |
| 11 | 3250 | 0 | 0 | 0 | 0 | 0 | 0 | 0 | 0 | 7 | 11 | 15 | 17 | 8 | 3 | 0 | 0 | 0 | 0 | 0 | 0 | 150 | 90 |
| 12 | 3253 | 0 | 0 | 0 | 0 | 0 | 12 | 12 | 15 | 14 | 0 | 0 | 1 | 0 | 0 | 0 | 0 | 0 | 0 | 0 | 0 | 180 | 0 |
| 13 | 3249 | 0 | 1 | 0 | 0 | 0 | 5 | 0 | 5 | 2 | 0 | 1 | 0 | 1 | 2 | 10 | 11 | 6 | 7 | 0 | 0 | 480 | -120 |
| 14 | 3249 | 0 | 0 | 0 | 0 | 0 | 0 | 0 | 0 | 0 | 0 | 0 | 0 | 0 | 4 | 15 | 14 | 14 | 7 | 0 | 0 | 120 | 240 |
| 15 | 3250 | 0 | 0 | 0 | 0 | 0 | 0 | 0 | 0 | 4 | 16 | 12 | 14 | 7 | 0 | 0 | 0 | 1 | 0 | 0 | 0 | 240 | 90 |
| 16 | 3252 | 0 | 0 | 0 | 0 | 0 | 0 | 5 | 15 | 13 | 12 | 8 | 1 | 0 | 0 | 0 | 0 | 0 | 0 | 0 | 0 | 150 | 30 |
| 17 | 3249 | 0 | 0 | 0 | 0 | 0 | 5 | 14 | 14 | 14 | 8 | 0 | 0 | 0 | 0 | 0 | 0 | 0 | 0 | 0 | 0 | 120 | 0 |
| 18 | 3250 | 0 | 0 | 0 | 0 | 0 | 6 | 12 | 14 | 12 | 10 | 0 | 0 | 0 | 0 | 0 | 0 | 0 | 0 | 0 | 0 | 120 | 0 |
| 19 | 3251 | 0 | 0 | 0 | 0 | 0 | 6 | 14 | 12 | 13 | 9 | 0 | 0 | 0 | 0 | 0 | 0 | 0 | 0 | 0 | 0 | 120 | 0 |
| 20 | 3249 | 0 | 0 | 0 | 0 | 0 | 6 | 14 | 12 | 14 | 8 | 0 | 0 | 0 | 0 | 0 | 0 | 0 | 0 | 0 | 0 | 120 | 0 |
| 21 | 3251 | 0 | 0 | 0 | 0 | 0 | 3 | 5 | 7 | 7 | 4 | 0 | 2 | 7 | 5 | 5 | 4 | 0 | 0 | 0 | 0 | 300 | 0 |
| 22 | 3252 | 0 | 0 | 0 | 0 | 0 | 0 | 0 | 0 | 0 | 0 | 0 | 5 | 13 | 10 | 12 | 7 | 0 | 0 | 0 | 0 | 120 | 180 |
| 23 | 3241 | 1 | 0 | 0 | 0 | 0 | 0 | 1 | 4 | 4 | 3 | 5 | 4 | 8 | 10 | 6 | 5 | 0 | 0 | 0 | 0 | 270 | 30 |
| 24 | 3250 | 0 | 0 | 0 | 0 | 0 | 0 | 0 | 0 | 0 | 0 | 0 | 4 | 13 | 15 | 12 | 10 | 0 | 0 | 0 | 0 | 120 | 180 |
| 25 | 3259 | 0 | 0 | 0 | 0 | 0 | 0 | 3 | 8 | 13 | 15 | 11 | 8 | 2 | 0 | 0 | 1 | 0 | 0 | 0 | 0 | 270 | 30 |
| 26 | 3240 | 0 | 0 | 0 | 0 | 0 | 4 | 12 | 16 | 13 | 9 | 0 | 0 | 0 | 0 | 0 | 0 | 0 | 0 | 0 | 0 | 120 | 0 |
| 27 | 3249 | 0 | 0 | 0 | 0 | 0 | 0 | 5 | 16 | 28 | 22 | 19 | 8 | 0 | 0 | 0 | 0 | 0 | 0 | 0 | 0 | 150 | 30 |

FIG. 7

EP 1 159 719 B1

FIG.8

FIG.9

| TTP STATISTICS (TIME INTERVAL) | WIDTH | OFFSET | MAX TTP | DELTA WIDTH | BURST | BURST LIKELI-HOOD | BURST 2 ABSOLUTE COEFF | |
|---|---|---|---|---|---|---|---|---|
| 1 | 0 | 0 | 0 | 0 | 0 | 0.00 | 0.5 | |
| 2 | 90 | 90 | 180 | 90 | 0 | 0.00 | 0.5 | |
| 3 | 90 | 60 | 150 | 0 | 0 | 0.00 | 0.5 | |
| 4 | 150 | 0 | 150 | 150 | 0 | 0.00 | 0.5 | |
| 5 | 30 | 0 | 30 | 0 | 0 | 0.00 | 0.5 | |
| 6 | 30 | 0 | 30 | 0 | 0 | 0.00 | 0.5 | |
| 7 | 30 | 0 | 30 | 0 | 0 | 0.00 | 0.5 | |
| 8 | 30 | 480 | 510 | 0 | 1 | 0.25 | 0.5 | |
| 9 | 30 | 0 | 30 | 0 | 0 | 0.24 | 0.5 | |
| 10 | 30 | 0 | 30 | 0 | 0 | 0.23 | 0.5 | |
| 11 | 30 | 0 | 30 | 0 | 0 | 0.21 | 0.5 | |
| 12 | 30 | 0 | 30 | 0 | 0 | 0.20 | 0.5 | |
| 13 | 1080 | 0 | 1080 | 1080 | 1 | 0.40 | 1 | |
| 14 | 60 | 810 | 870 | 0 | 0 | 0.38 | 0.9 | |
| 15 | 60 | 840 | 900 | 0 | 0 | 0.36 | 0.9 | |
| 16 | 90 | 840 | 930 | 90 | 0 | 0.35 | 0.9 | |
| 17 | 930 | 810 | 1740 | 930 | 1 | 0.51 | 1 | |
| 18 | 60 | 840 | 900 | 0 | 0 | 0.48 | 1 | |
| 19 | 90 | 840 | 930 | 90 | 0 | 0.46 | 1 | |
| 20 | 60 | 810 | 870 | 0 | 0 | 0.44 | 1 | |
| 21 | 60 | 840 | 900 | 0 | 0 | 0.41 | 1 | |
| 22 | 1020 | 840 | 1860 | 1020 | 1 | 0.56 | 1 | |
| 23 | 60 | 810 | 670 | 0 | 0 | 0.53 | 1 | |
| 24 | 90 | 840 | 930 | 90 | 0 | 0.51 | 1 | |
| 25 | 60 | 840 | 900 | 0 | 0 | 0.48 | 1 | |
| 26 | 960 | 840 | 1800 | 960 | 1 | 0.61 | 1 | |
| 27 | 30 | 840 | 870 | 0 | 0 | 0.58 | 1 | |
| 28 | 30 | 810 | 840 | 0 | 0 | 0.55 | 1 | |
| 29 | 30 | 810 | 840 | 0 | 0 | 0.52 | 1 | |
| 30 | 60 | 840 | 900 | 60 | 0 | 0.50 | 1 | |
| 31 | 30 | 840 | 870 | 0 | 0 | 0.47 | 1 | |
| 32 | 30 | 840 | 870 | 0 | 0 | 0.45 | 1 | |
| 33 | 60 | 840 | 900 | 60 | 0 | 0.43 | 1 | |
| 34 | 30 | 840 | 870 | 0 | 0 | 0.41 | 1 | |
| 35 | 30 | 810 | 840 | 0 | 0 | 0.38 | 0.9 | |

FIG.10A

| DELTA OFFSET | LOCAL EXTRA MUM SIZE | DESIRED JB SIZE | REDUCE FACTOR | TIME TO RE-DUCE | OFFSET OUT | ABSELUT OUT | PRIOR ART |
|---|---|---|---|---|---|---|---|
| | | | 0.5 | | 30 | | 0.75 |
| | | | | | | | |
| 0 | 0 | 0 | 0.00 | 0 | 0 | 0 | 0 |
| 90 | 90 | 45 | 0.00 | 90 | 90 | 60 | 90 |
| 0 | 0 | 68 | 0.00 | 60 | 60 | 60 | 90 |
| 0 | 150 | 109 | 0.00 | 0 | 0 | 120 | 150 |
| 0 | 0 | 69 | 0.00 | 0 | 0 | 60 | 120 |
| 0 | 0 | 50 | 0.00 | 0 | 0 | 60 | 90 |
| 0 | 0 | 40 | 0.00 | 0 | 0 | 30 | 90 |
| 480 | 480 | 260 | 0.40 | 288 | 300 | 270 | 480 |
| 0 | 0 | 145 | 0.38 | 0 | 0 | 150 | 360 |
| 0 | 0 | 87 | 0.35 | 0 | 0 | 90 | 270 |
| 0 | 0 | 59 | 0.33 | 0 | 0 | 60 | 210 |
| 0 | 0 | 44 | 0.31 | 0 | 0 | 30 | 180 |
| 0 | 1080 | 1080 | 0.71 | 0 | 0 | 1080 | 1080 |
| 0 | 0 | 978 | 0.67 | 271 | 270 | 990 | 840 |
| 60 | 60 | 886 | 0.63 | 313 | 300 | 900 | 660 |
| 0 | 90 | 807 | 0.59 | 344 | 330 | 810 | 510 |
| 0 | 930 | 930 | 0.90 | 81 | 90 | 930 | 930 |
| 0 | 0 | 930 | 0.87 | 112 | 120 | 930 | 720 |
| 0 | 90 | 930 | 0.82 | 152 | 150 | 930 | 570 |
| 0 | 0 | 930 | 0.77 | 184 | 180 | 930 | 450 |
| 60 | 60 | 930 | 0.73 | 228 | 240 | 930 | 360 |
| 0 | 1020 | 1020 | 0.90 | 84 | 90 | 1020 | 1020 |
| 0 | 0 | 1020 | 0.90 | 81 | 90 | 1020 | 780 |
| 90 | 90 | 1020 | 0.90 | 84 | 90 | 1020 | 600 |
| 0 | 0 | 1020 | 0.86 | 116 | 120 | 1020 | 480 |
| 0 | 960 | 1020 | 0.90 | 84 | 90 | 1020 | 960 |
| 0 | 0 | 1020 | 0.90 | 84 | 90 | 1020 | 720 |
| 0 | 0 | 1020 | 0.90 | 81 | 90 | 1020 | 540 |
| 0 | 0 | 1020 | 0.90 | 81 | 90 | 1020 | 420 |
| 60 | 60 | 1020 | 0.89 | 88 | 90 | 1020 | 330 |
| 0 | 0 | 1020 | 0.85 | 130 | 120 | 1020 | 270 |
| 0 | 0 | 1020 | 0.80 | 170 | 180 | 1020 | 210 |
| 0 | 60 | 1020 | 0.75 | 208 | 210 | 1020 | 180 |
| 0 | 0 | 1020 | 0.71 | 243 | 240 | 1020 | 150 |
| 0 | 0 | 921 | 0.67 | 267 | 270 | 930 | 120 |

FIG.10B

| 36 | 30 | 810 | 840 | 0 | 0 | 0.37 | 0.9 |
|----|-----|------|------|-----|---|------|-----|
| 37 | 30 | 810 | 840 | 0 | 0 | 0.35 | 0.9 |
| 38 | 60 | 780 | 840 | 60 | 0 | 0.33 | 0.9 |
| 39 | 810 | 720 | 1530 | 810 | 1 | 0.50 | 1 |
| 40 | 120 | 810 | 930 | 0 | 0 | 0.47 | 1 |
| 41 | 30 | 810 | 840 | 0 | 0 | 0.45 | 1 |
| 42 | 30 | 810 | 840 | 0 | 0 | 0.43 | 1 |
| 43 | 30 | 810 | 840 | 0 | 0 | 0.41 | 1 |
| 44 | 30 | 810 | 840 | 0 | 0 | 0.38 | 0.9 |
| 45 | 30 | 720 | 750 | 0 | 0 | 0.37 | 0.9 |
| 46 | 30 | 600 | 630 | 0 | 0 | 0.35 | 0.9 |
| 47 | 30 | 540 | 570 | 0 | 0 | 0.33 | 0.9 |
| 48 | 30 | 510 | 540 | 0 | 0 | 0.31 | 0.9 |
| 49 | 30 | 460 | 490 | 0 | 0 | 0.30 | 0.5 |
| 50 | 60 | 300 | 360 | 60 | 0 | 0.28 | 0.5 |
| 51 | 30 | 90 | 120 | 0 | 0 | 0.27 | 0.5 |
| 52 | 60 | 30 | 90 | 60 | 0 | 0.26 | 0.5 |
| 53 | 60 | 30 | 90 | 0 | 0 | 0.24 | 0.5 |
| 54 | 30 | 30 | 60 | 0 | 0 | 0.23 | 0.5 |
| 55 | 30 | 30 | 60 | 0 | 0 | 0.22 | 0.5 |
| 56 | 30 | 30 | 60 | 0 | 0 | 0.21 | 0.5 |
| 57 | 30 | 30 | 60 | 0 | 0 | 0.20 | 0.5 |
| 58 | 30 | 0 | 30 | 0 | 0 | 0.19 | 0.5 |
| 59 | 210 | 0 | 210 | 210 | 1 | 0.39 | 0.9 |
| 60 | 360 | 210 | 570 | 360 | 1 | 0.54 | 1 |
| 61 | 90 | 600 | 690 | 0 | 0 | 0.52 | 1 |
| 62 | 60 | 360 | 420 | 0 | 0 | 0.49 | 1 |
| 63 | 30 | 360 | 390 | 0 | 0 | 0.47 | 1 |
| 64 | 30 | 360 | 390 | 0 | 0 | 0.44 | 1 |
| 65 | 90 | 360 | 450 | 90 | 0 | 0.42 | 1 |
| 66 | 30 | 330 | 360 | 0 | 0 | 0.40 | 0.9 |
| 67 | 30 | 330 | 360 | 0 | 0 | 0.38 | 0.9 |
| 68 | 60 | 300 | 360 | 60 | 0 | 0.36 | 0.9 |
| 69 | 30 | 300 | 330 | 0 | 0 | 0.34 | 0.9 |
| 70 | 30 | 150 | 180 | 0 | 0 | 0.33 | 0.9 |
| 71 | 30 | 240 | 270 | 0 | 0 | 0.31 | 0.9 |
| 72 | 60 | 240 | 300 | 60 | 0 | 0.29 | 0.5 |
| 73 | 30 | 120 | 150 | 0 | 0 | 0.28 | 0.5 |
| 74 | 30 | 120 | 150 | 0 | 0 | 0.26 | 0.5 |
| 75 | 30 | 60 | 90 | 0 | 0 | 0.25 | 0.5 |

FIG.10C

| | | | | | | | |
|---|---|---|---|---|---|---|---|
| 0 | 0 | 832 | 0.63 | 299 | 300 | 840 | 90 |
| 0 | 0 | 752 | 0.59 | 328 | 330 | 750 | 90 |
| 0 | 60 | 683 | 0.56 | 343 | 330 | 690 | 90 |
| 0 | 810 | 810 | 0.89 | 76 | 90 | 810 | 810 |
| 0 | 0 | 810 | 0.85 | 125 | 120 | 810 | 630 |
| 0 | 0 | 810 | 0.80 | 164 | 150 | 810 | 480 |
| 0 | 0 | 810 | 0.75 | 200 | 210 | 810 | 360 |
| 0 | 0 | 810 | 0.71 | 235 | 240 | 810 | 270 |
| 0 | 0 | 732 | 0.67 | 267 | 270 | 720 | 210 |
| 0 | 0 | 662 | 0.63 | 265 | 270 | 660 | 180 |
| 0 | 0 | 599 | 0.59 | 243 | 240 | 600 | 150 |
| 0 | 0 | 542 | 0.56 | 238 | 240 | 540 | 120 |
| 0 | 0 | 491 | 0.53 | 241 | 240 | 480 | 90 |
| 0 | 0 | 260 | 0.50 | 232 | 240 | 270 | 90 |
| 0 | 60 | 160 | 0.47 | 160 | 150 | 150 | 90 |
| 0 | 0 | 95 | 0.44 | 51 | 60 | 90 | 90 |
| 0 | 60 | 78 | 0.41 | 18 | 30 | 90 | 90 |
| 0 | 0 | 69 | 0.39 | 18 | 30 | 60 | 90 |
| 0 | 0 | 49 | 0.36 | 19 | 30 | 60 | 90 |
| 0 | 0 | 40 | 0.34 | 20 | 30 | 30 | 90 |
| 0 | 0 | 35 | 0.32 | 21 | 30 | 30 | 90 |
| 0 | 0 | 32 | 0.30 | 21 | 30 | 30 | 90 |
| 0 | 0 | 31 | 0.28 | 0 | 0 | 30 | 90 |
| 0 | 210 | 192 | 0.68 | 0 | 0 | 180 | 210 |
| 0 | 360 | 360 | 90 | 21 | 30 | 360 | 360 |
| 0 | 0 | 360 | 90 | 60 | 60 | 360 | 300 |
| 0 | 0 | 360 | 0.88 | 43 | 30 | 360 | 240 |
| 0 | 0 | 360 | 0.83 | 61 | 60 | 360 | 180 |
| 0 | 0 | 360 | 0.78 | 78 | 90 | 360 | 150 |
| 0 | 90 | 360 | 0.74 | 93 | 90 | 360 | 150 |
| 0 | 0 | 327 | 0.70 | 100 | 90 | 330 | 120 |
| 0 | 0 | 297 | 0.66 | 113 | 120 | 300 | 90 |
| 0 | 60 | 274 | 0.62 | 114 | 120 | 270 | 90 |
| 0 | 0 | 249 | 0.58 | 125 | 120 | 240 | 90 |
| 0 | 0 | 227 | 0.55 | 67 | 60 | 240 | 90 |
| 90 | 90 | 208 | 0.52 | 116 | 120 | 210 | 90 |
| 0 | 60 | 134 | 0.49 | 123 | 120 | 120 | 90 |
| 0 | 0 | 82 | 0.46 | 65 | 60 | 90 | 90 |
| 0 | 0 | 56 | 0.43 | 68 | 60 | 60 | 90 |
| 0 | 0 | 43 | 0.40 | 36 | 30 | 30 | 90 |

FIG.10D

FIG. 11